# EUROPEAN PATENT APPLICATION

(11) **EP 0 596 143 A1**
(43) Date of publication of application: **11.05.1994**
(21) Application number: 93913673.5
(22) Date of filing: 24.05.1993
(51) Int. Cl.: F17D 1/04, F01K 23/06, F02C 1/00, F02C 1/04, F17D 1/075

(54) **GAS-DISTRIBUTING STATION WITH ENERGETIC INSTALLATION**

(30) Priority: 25.05.1992 RU 5056388
(71) Applicant: AKTSIONERNOE OBSCHESTVO "KRYOKOR", Moscow 105043 (RU)
(72) Inventor: SHPAK, Vilen Nikitovich, Kharkov, 310023 (RU)
(74) Representative: Iemenschot, Johannes Andreas, Ir.
(86) International application number: RU9300117
(87) International publication number: WO9324785

(57) **Abstract**

₅n7 The invention relates to a gas-distributing station with an energetic installation using the energy of the gas in a main gas pipeline. The basic goal of the invention is to remove the gas pipeline temperature regime limitations, to raise the effectiveness of the energetic installation of the station and provide for its higher security. The goal is achieved due to the fact that the natural gas from the main gas pipeline (6) is fed to a heat-exchange regenerator (5) where it is heated by a return flow of the gas coming from a turbo-expander (1). From the heat-change regenerator (5) the gas first comes to a heat-exchange unit (4) where it is heated by the exhaust gas of a gas-turbine engine (3) and then it comes to the turbo-expander (1). In the turbo-expander (1) the gas is expanded with generation of energy transmitted to an electric generator (2) to which is kinematically connected the gas-turbine engine (3) for transferring its generated energy to the electric generator (2). The expended and partially cooled gas after the turbo-expander (1) comes to the heat-exchange regenerator (5) for preliminary heating of the gas removed from the main gas pipeline and then is drop- ed to the main gas pipeline alter a reducing device (7), having been cooled down to a temperature slightly exceeding that of the gas inside the main gas pipeline (6).

## Description

### Technical Field

The invention relates to equipment of gas mains, more specifically to a gas distribution station with a power plant using the gas energy of the gas main.

### Prior Art

Known in the art is a gas distribution station comprising a turbo-expander for actuating an electric generator connected at the input to a gas main before a reducer and at the output-behind the latter (Journal "Gazovaya promyshlennost" N 11,1988, Moscow, cover page 4).

The conventional installation cannot practically be used with a pressure differential > 1,5 - 2 on the reducer (turbo - expander) because of a considerable drop of temperature thereat of natural gas behind the reducer(turbo-expander), and under the strength conditions of gas lines, gas cannot be fed thereinto after reducing at a temperature below 10°C.

And the pre-heating of gas to an initial temperature in a heat-exchanger utilizing the heat of burnt gas reduces utilization to zero, which is why such installations find no application in the given field.

Further known is a gas distribution station comprising a turbo expander for actuating an electric generator, a gas-turbine engine with the electric generator, the heat of whose burnt gases is used for pre-heating the natural gas removed from a gas main before a reducer and fed to the turbo-expander.

Owing to the pre-heating of gas at the input to a turbo-expander of the conventional station, there is increased power generated by the latter as is the gas temperature behind a reducer, which permits expanding a range of its use, including the above- identified pressure differential > 1,2-2(EP,A2 No. 0004398).

The conventional station is not efficient enough due to the incomplete utilization of burnt gases because insulation used on gas pipe lines does not enable one to considerably increase the temperature of said burnt gases behind an expansion valve (over 70°C) according to strength conditions thereof and also brings about a limitation of the transmissive capacity of the gas pipe line and an increased resistance in the latter due to an increase in the gas volume with its invariable mass flow rate.

### Essence of the invention

It is the principal object of the present invention to eliminate restrictions of the temperature conditions of a gas pipe line, to enhance efficiency of the power plant of a station and to improve the latter's reliability.

Said task is accomplished owing to the fact that in a gas distribution station with a power plant comprising a gas main with a reducer, a gas - turbine engine with a heat exchanger-utiliser at the output for heating the gas removed from the gas main before the reducer, and a turbo-expander with an electric generator, and along with this, the input of the turbo-expander is connected to the output of the heat exchanger - utilizer, the provision is made of a heat exchanger-regenerator for pre-heating said said gas taken away. More than that, the heat-exchanger-regenerator is mounted before the heat-exchanger-utilizer and connected, as to a heating medium, with its input and output to respectively the output of the turbo-expander and the gas pipe line after the reducer, and as to a heated medium, respectively with the input --to the gas main before the reducer and with the output - to the input of the heat exchanger-utilizer.

In the gas distribution station, a gas turbine engine can be connected kinematically with the electric generator of the turbo-expander.

### Summary of the drawings

The present invention is explained by a description of the concrete example of its embodiment and by the drawing attached wherein:

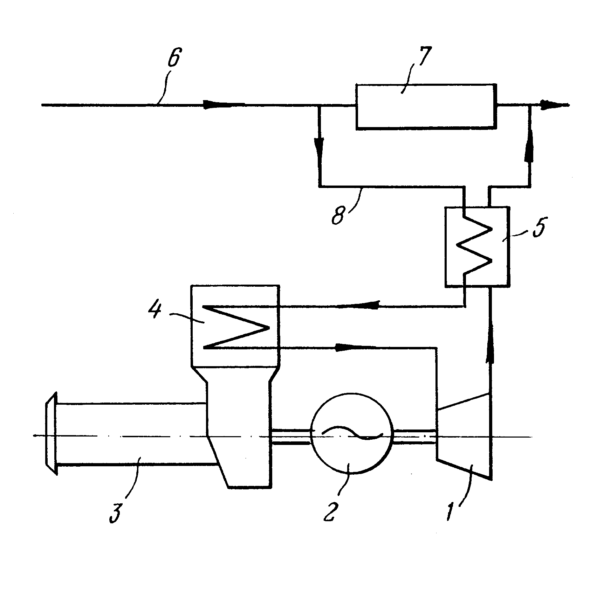

Fig.1 - a basic circuit of a gas distribution station with a power plant.

### Preferred embodiment of the invention

A gas distribution station comprises a gas main 6 with a reducer 7, and a pipe line 8 for the gas to be withdrawn into a power plant, comprising a turbo-expander I, an electric generator 2, a gas turbine engine 3, a heat exchanger - utilizer 4, and a heat exchanger-regenerator 5.

Natural gas is taken away from the gas main 6 before the reducer 7 to be admitted over the pipe line 8 to the heat exchanger- regenerator 5, where it is warmed up by a back gas flow from turbo-expander I. From the heat exchanger-regenerator 5, the gas is first admitted to the heat exchanger 4 to be pre-heated by the burnt gases of the gas turbine engine 3 and then to the turbo expander I, wherein said gas is expanded with the performance if work transmitted to the electric generator 2, to which the gas turbine engine 3 is connected kinematically to transmit its generated power to the electric generator 2.

The expanded and partially cooled gas is admitted after the turbo-expander I to the heat-exchanger - regenerator 5 for pre-heating the gas withdrawn from a gas main to be subsequently disposed into the gas main after the reducer 7, having been cooled to a temperature insignificantly ( by 10-50°C) exceeding the gas temperature in the gas main 6.

The pre-heating of the gas of a gas main in a heat exchanger -regenerator with the heat of the burnt gas in a turbo-expander makes it possible to enhance efficiency and reliability of a gas distribution station by way of increasing the efficiency of a power plant incorporated therein, subsequent to regeneration of the heat of gases escaping from the turbo-expender and optimization of the temperature of the gas coming out of the turbo-expander into the gas main in consequence of a reduction of hydro-loss in said gas main and an increase in the latter's strength reliability.

Thus, mounting at the output from a turbo-expander of a heat exchanger-regenerator reducing the temperature of gas to be fed to a gas pipe line enables one to also overcome a restriction as to a temperature rise in pre-heating the gas before the turbo-expander.

The kinematic coupling of a gas turbine engine with the electric generator of a turbo-expander protects the plant also in the event of emergency electric load shedding, because the compressor of the gas turbine engine is a super load in speed-up.

A system for controlling the plant is simplified, inasmuch as the necessity falls away in maintaining a frequency of rotation by a separate system because this function is performed by the system of control of a gas turbine engine by way of effecting the power of a turbo-expander through a change of the temperature of burnt gases.

### Industrial applicability

The invention will find application in transportation of natural gas over mains, in supplying the natural gas to users (industrial plants, say, chemical combines, thermal electric stations and also municipal networks).

## Claims

1. A gas distribution station with a power plant, comprising a gas main with a reducer, a gas turbine engine with a heat exchanger-utilizer at the output for heating the gas taken away before the reducer from the gas main, and a turbo-expander with an electric generator, and along with this, the input of the turbo expander is connected to the output of the heat exchanger-utilizer characterized in that it is further provided with a heat exchanger-regenerator for pre-heating said gas removed, which is installed before the heat exchanger-utilizer and connected, as to a heating medium, with its input and output, respectively, to the output of the turbo-expander and to a gas pipe line after the reducer, and as to a heated medium, respectively, with the input - to the gas main before the reducer and with the output-to the input of the heat exchanger - utilizer.

2. A station of claim I, characterized in that the gas turbine engine is kinematically connected to the electric generator of the turbo-expander.
